# EUROPÄISCHE PATENTSCHRIFT

(11) **EP 0 358 013 B1**
(45) Veröffentlichungstag und Bekanntmachung des Hinweises auf die Patenterteilung: **02.02.1994**
(21) Anmeldenummer: 89115244.9
(22) Anmeldetag: 18.08.1989
(51) Int. Cl.: G01N 1/06

(54) **Automatische Arretierung der Antriebseinrichtung eines Mikrotoms**
Automatic stop for the drive mechanism of a microtome
Arrêt automatique pour le dispositif de commande d'un microtome

(30) Priorität: 09.09.1988 DE 3830725
(43) Veröffentlichungstag der Anmeldung: 14.03.1990
(73) Patentinhaber: Leica Industrieverwaltung GmbH, D-35530 Wetzlar (DE)
(72) Erfinder: Pfeifer, Gerhard, D-6336 Solms (DE)

(56) Entgegenhaltungen:
- EP-A- 0 039 822
- EP-A- 0 153 183
- FR-A- 805 055
- GB-A- 990 099
- US-A- 4 479 402

## Beschreibung

Die Erfindung betrifft eine automatische Arretierung der Antriebseinrichtung eines Mikrotoms gemäß dem Oberbegriff des Anspruchs 1.

Aus der FR 805 055 ist ein Rotationsmikrotom mit einem feststehenden Messerhalter und einer daran vorbeibewegten zu schneidenden Probe vorgesehen. Die Probe ist auf einer drehenden Scheibe angeordnet, die von einer Antriebseinrichtung bewegt und gleichzeitig um eine bestimmten Betrag in Messerrichtung zugestellt wird. In der Scheibe ist eine Bohrung vorgesehen, in die zur Arretierung der Scheibe bei einem Präparatwechsel ein Stift eingreift. Als Antriebseinheit ist eine drehbar gelagerte Kurbel mit einem Handgriff an diesem Mikrotom vorgesehen. Zur schnellen Ausrichtung der Probe auf das Messer kann in den Drehbereich der Kurbel ein Hebel eingeschwenkt werden. Der Hebel ist über getriebliche Mittel mit der Scheibe verbunden.

Bekannte Mikrotome mit einer Handhabe zur manuellen Betätigung der Antriebseinrichtung für den Schneidvorgang weisen eine Sicherheitseinrichtung zum Sperren der Handhabe auf. Dies ist zwingend notwendig, um bei einem Wechsel des zu schneidenden Objektes oder beim Wechsel bzw. Ausrichten des Schneidmessers die Verletzungsgefahr durch eine unbeabsichtigte Bewegung der Objektaufnahme bzw. des Schneidmessers auszuschließen. Es ist daher üblich, durch einen in der Nähe der Handhabe angeordneten Klemmhebel die Handhabe zu arretieren. Dies setzt jedoch voraus, daß die Bedienperson diese Sicherheitseinrichtung bewußt betätigt. Durch diese umständliche Handhabung sind Bedienfehler möglich und somit ist die Gefahr einer erheblichen Verletzung am Schneidmesser nicht auszuschließen.

Es ist daher Aufgabe der vorliegenden Erfindung, die Bediensicherheit eines Mikrotoms in ergonomisch vorteilhafter Weise zu erhöhen, um die Verletzungsgefahr durch eine Fehlbedienung auszuschließen.

Diese Aufgabe wird erfindungsgemäß durch den kennzeichnenden Teil des Anspruchs 1 gelöst. Vorteilhafte Weiterbildungen sind Gegenstand der Unteransprüche.

In der Zeichnung ist die Erfindung in mehreren Ausführungsbeispielen schematisch dargestellt. Es zeigen:
- Fig. 1:: eine Gesamtansicht eines Rotationsmikrotoms,
- Fig. 2:: einen Schnitt durch das Mikrotom,
- Fig. 3:: einen Schnitt durch die Handhabe des Mikrotoms entlang der Linie I-I,
- Fig. 4:: ein Ausführungsbeispiel mit einer Lichtschranke,
- Fig. 5:: ein weiteres Ausführungsbeispiel mit einem Elektromagneten,
- Fig. 6:: die Handhabe des Mikrotoms mit einem Rastgesperre,
- Fig. 7:: ein weiteres Ausführungsbeispiel der Handhabe mit einem elektrischen Schalter,
- Fig. 8:: eine magnetische Kupplung mit einer Verzahnung,
- Fig. 9:: ein Handrad mit einem daran lösbar befestigten Handgriff.

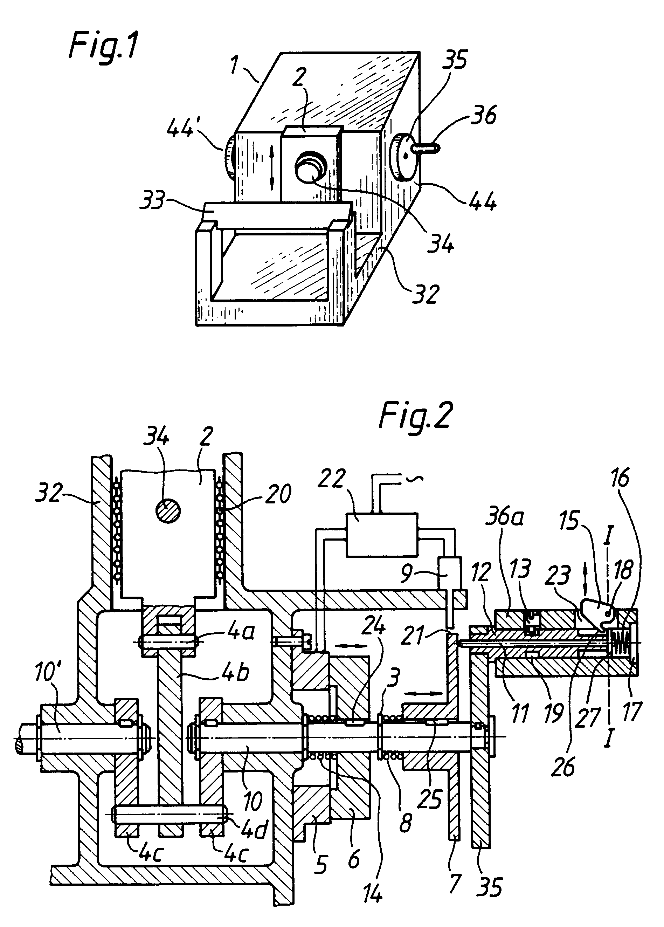

Die Fig. 1 zeigt schematisch ein erfindungsgemäßes Rotationsmikrotom 1, mit einem Gehäuserahmen 32, einem feststehenden Messer 33, einen in Pfeilrichtung beweglichen Objektschlitten 2, an dem eine Objektaufnahme 34 angeordnet ist. Eine Handhabe 44 mit einem Handrad 35 und einem Handgriff 36 dient dem manuellen Antrieb des Objektschlittens 2. Eine weitere Handhabe 44′ ist zum manuellen Antrieb des Objektschlittens 2 gegenüberliegend der Handhabe 44 am Mikrotom 1 angeordnet.

In der Fig. 2 ist ein Schnitt durch das Mikrotom 1 dargestellt. Der Objektschlitten 2 mit der Objektaufnahme 34 ist über eine Rollenführung 20 am Gehäuserahmen 32 beweglich gelagert und über herkömmliche mechanische Koppelelemente, Achszapfen 4a, Schubstange 4b, Schubkurbel 4c und Achszapfen 4d mit einer Welle 10 verbunden. Diese ist drehbeweglich am Gehäuserahmen 32 befestigt und weist an ihrem Ende die Handhabe 44 zum Antrieb des Objektschlittens 2 auf. Die Welle 10 umgibt ein fest am Gehäuserahmen 32 befestigter Elektromagnet 5. Dieser ist hier als Elektro-Permanentmagnet ausgebildet, d. h. im Permanentmagneten ist eine Spule vorgesehen, die durch Anlegen einer elektrischen Spannung die permanent wirkenden magnetischen Kräfte aufhebt.

Als Gegenstück zu diesem Magneten ist eine Kupplungsscheibe 6 über eine Passfeder 24 drehgesichert auf der Welle 10 angeordnet und mit einer Druckfeder 14 axial verschieblich ausgebildet. Der Bereich dieser Bewegung wird durch eine fest auf der Welle 10 angeordnete Sicherungsscheibe 3 begrenzt. Ein weiterer auf der Welle 10 angeordneter und mit einer Druckfeder 8 axial verschieblicher Schaltring 7 ist gleichfalls mit einer Passfeder 25 drehgesichert auf der Welle 10 befestigt.

Die Welle 10 ist über das Koppelelement 4d mit einer weiteren Welle 10′ verbunden, die ebenfalls eine Sicherheitseinrichtung (nicht mit dargestellt) aufweist und in Wirkverbindung mit der Handhabe 44′ steht.

Ferner zeigt die Fig. 2 eine Steuereinrichtung 22, die elektrisch mit einem am Gehäuserahmen 32 befestigten und dem Schaltring 7 gegenüberliegenden Sensor 9 sowie dem Elektromagneten 5 verbunden ist.

Der am Handrad 35 angeordnete Handgriff 36 weist ein als Hülse ausgestaltetes Griffstück 36a auf, das um die Achse 12 des Handgriffs 36 frei drehgeweglich, jedoch gegen eine axiale Verschiebung gesichert ist. Dazu weist die Achse 12 eine ringförmige Nut 19 auf, in die ein Gewindestift 13 eingreift. Im Innern der Achse 12 ist ein axial verschieblicher Stift 11 angeordnet, dessen Ende kraftschlüssig mit dem Schaltring 7 in Wirkverbindung steht. Im Innern des Handgriffs 36 ist dem Stift 11 eine runde Scheibe 27 zugeordnet, an der sich eine weitere Druckfeder 16 abstützt. Die zweite Anlagefläche für die Druckfeder 16 bildet ein in den Handgriff 36 eingeschraubter Stopfen 17. Das Griffstück 36a weist eine Aussparung 23 auf, aus der ein Hebel 15 herausragt. Dieser ist über einen Stift 18 gesichert und in Pfeilrichtung bewegbar. Sein im Handgriff befindliches Ende steht in kraftschlüssiger Verbindung mit der Scheibe 27.

Der hier dargestellte manuelle Mikrotomantrieb wird durch Drehen des Handrades 35 in Funktion gesetzt. Über den Handgriff 36 wird dabei die Welle 10 gedreht. Die an der Welle angeordneten Kupplungselemente 4a bis 4d übertragen die Bewegung auf den Objektschlitten 2. Dabei wird die Drehbewegung der Welle 10 nach Art eines Schubkurbelantriebs in eine oszillierende Linearbewegung umgesetzt. Die Sicherheitseinrichtung des Mikrotoms 1 muß dabei außer Funktion gesetzt werden. Dies geschieht dadurch, daß mit dem Umfassen des Griffstücks 36a der Hebel 15 in den Handgriff 36 gedrückt und die Scheibe 27 gegen die Kraft der Druckfeder 16 in Richtung des Stopfens 17 bewegt wird. Durch die Verbindung der Scheibe 27 mit dem Stift 11 wird dieser in den Handgriff 36 zurückgezogen und die kraftschlüssige Verbindung von Stift 11 und dem Schaltring 7 aufgehoben. Dieser folgt durch die Kraft der Druckfeder 8 der Bewegung des Stiftes 11.

Dabei verläßt die Kante 21 des Schaltringes 7 den Arbeitsbereich des Sensors 9, der hier als Annäherungssensor ausgebildet ist. Der Sensor gibt ein elektrisches Signal an die Steuereinrichtung 22, die den Elektromagneten 5 mit Strom beaufschlagt. Dadurch wird die Permanentmagnet-Kupplung zwischen dem Elektromagneten 5 und der Kupplungsscheibe 6 aufgehoben, da die magnetischen Kräfte zwischen dem Elektromagneten 5 und der Kupplungsscheibe 6 geringer sind als die Kraft der Druckfeder 14, wobei die auf der Welle 10 drehgesichert und axial verschiebliche Kupplungsscheibe 6 gegen die Sicherungsscheibe 3 gedrückt wird. Die Entkopplung des Elektromagneten 5 von der Kupplungsscheibe 6 hebt somit die Sperrung der Welle 10 auf. Durch Loslassen des Handgriffs 36 wird mittels der Kraft der Feder 16 der Stift 11 gegen den Schaltring 7 bewegt und dieser mit seiner Kante 21 in den Arbeitsbereich des Sensors 9. Dabei wird die Druckfeder 8 gespannt, deren Kraft selbstverständlich kleiner ist, als die Kraft der Feder 16 im Handgriff 36. Der Sensor 9 gibt durch die Annäherung des Schaltrings 7 ein entsprechendes Signal an die Steuereinrichtung 22 ab, die den Strom zum Elektromagneten 5 unterbricht. Die magnetischen Kräfte zwischen der Kupplungsscheibe 6 und dem Elektromagneten 5 sind jetzt wieder größer als die Kraft der Druckfeder 14. Daraus resultiert eine kraftschlüssige Verbindung von Kupplungsscheibe 6 und dem Elektromagneten 5 und somit eine Sperrung der Welle 10.

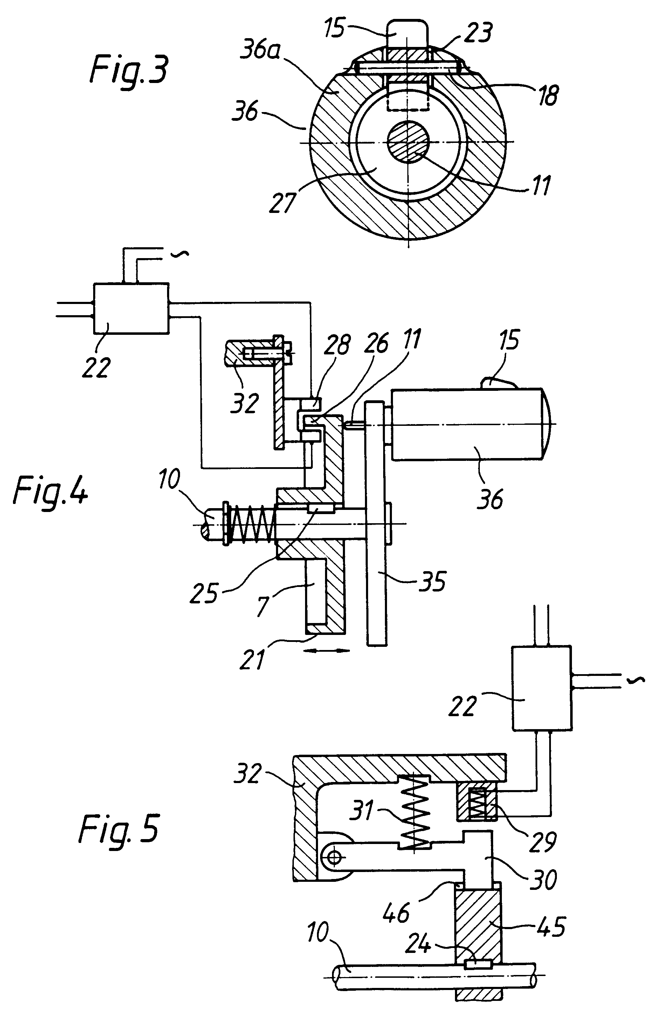

Die Fig. 3 zeigt einen Schnitt entlang der Linie I-I aus der Fig. 2. Der dargestellte Schnitt durch den Handgriff 36 zeigt das ausliegende, drehbare Griffstück 36a und die innenliegende Scheibe 27 mit dem daran angeordneten Stift 11. Der mit einem Ende aus dem Griffstück 36a ragende Hebel 15 ist über den Sicherungsstift 18 im Griffstück 36a schwenkbar gelagert.

Das innenliegende Ende des Hebels 15 steht in kraftschlüssiger Verbindung (Feder 16 aus der Fig. 2 ist hier nicht mit dargestellt) mit der Scheibe 27. Die Wirkverbindung des Hebels 15 mit der Scheibe 27 ist somit unabhängig von einer Drehung des Griffstücks 36a um den Stift 11 bzw. die Achse 12.

Die Fig. 4 zeigt eine Variante in der Ausführung des Sensors 9 aus der Fig. 2. Der Sensor ist hier als Lichtschranke 28 ausgebildet und über elektrische Leitungen mit der Steuereinrichtung 22 verbunden. In das U-förmige Profil der Lichtschranke 28 ragt ein an der Schaltringkante 21 des Rings 7 angeordneter Steg 26. Dieser ist ringförmig ausgebildet, so daß er den gesamten Umfang des Schaltrings 7 umfaßt. Wie bereits zur Fig. 2 ausgeführt, ist der Schaltring 7 in Abhängigkeit vom Stift 11 auf der Welle 10 axial verschieblich ausgebildet, wodurch der Steg 26 den Schaltkontakt der Lichtschranke 28 auslöst. Über die Steuereinrichtung 22 wird die elektromagnetische Kupplung betätigt.

In der Fig. 5 wird eine Variante zur Sperrung der Welle 10 gezeigt. Die in der Fig. 2 dargestellte elektrische Permanent-Magnetkupplung mit dem Elektromagnet 5 und der Kupplungsscheibe 6 ist hier durch eine fest auf der Welle 10 angeordnete Sperrscheibe 45 ersetzt. Diese Scheibe 45 weist an ihrem äußeren Umfang einen Zahnkranz 46 auf, in den ein am Gehäuserahmen 32 schwenkbar befestigter Hebel 30 eingreift. Zwischen diesem Hebel 30 und dem Gehäuserahmen 32 sind eine Druckfeder 31 sowie ein Elektromagnet 29 angeordnet. Letzterer ist elektrisch mit der bereits beschriebenen Steuereinrichtung 22 verbunden.

Wird die Steuereinrichtung 22 mit einem entsprechenden Signal der bereits beschriebenen Sensoren beaufschlagt, so gibt sie ein entsprechendes Signal an den Elektromagneten 29 ab. Die magnetische Kraft, die selbstverständlich größer ist als die Kraft der Feder 31, hebt den Hebel 30 aus seiner Wirkverbindung mit dem Zahnkranz 46. Durch Abschalten des Elektromagneten 29 wird der Hebel 30 mittels der Kraft der Feder 31 wieder in Wirkstellung mit dem Zahnkranz 46 der Sperrscheibe 45 gebracht und somit die Welle 10 arretiert.

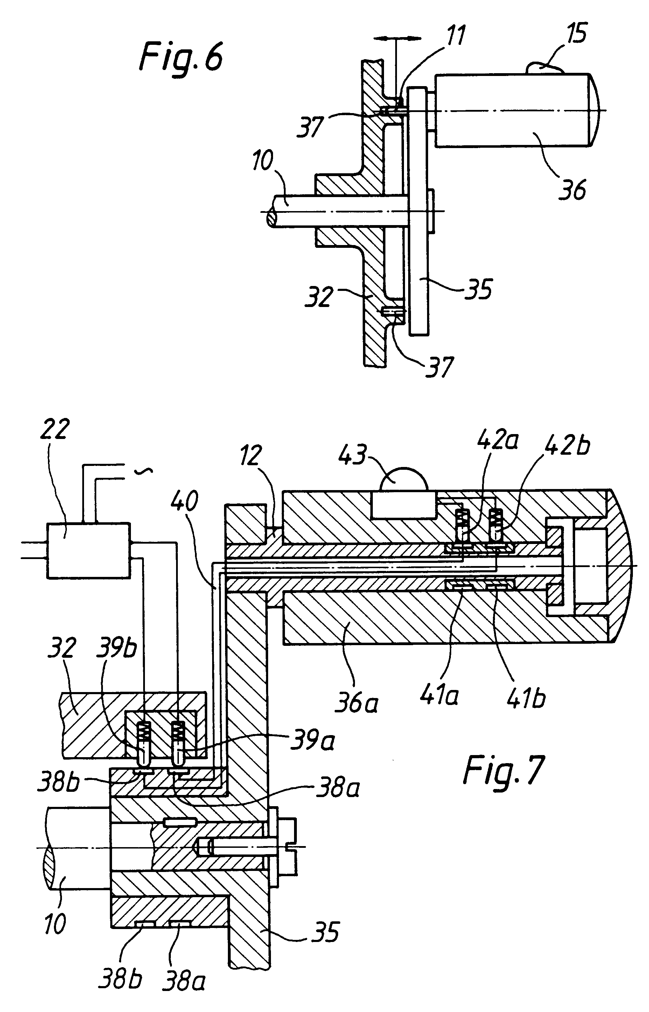

Die Fig. 6 zeigt eine rein mechanisch arbeitende Variante der Sperrvorrichtung. Im Gehäuserahmen 32 sind dazu auf einer Kreisbahn einzelne nebeneinander angeordnete Aussparungen 37 vorgesehen. Die Aussparungen 37 sind derart dimensioniert, daß der Stift 11 in diesen rastet. Der Stift 11 ist dabei, wie bereits in der Fig. 2 beschrieben, über den Hebel 15 im Handgriff 36 axial verschieblich ausgeführt.

In der Fig. 7 ist schematisch eine elektrisch arbeitende Betätigungseinrichtung für die Sperrvorrichtung dargestellt. Im drehbaren Griffstück 36a ist dazu ein Schalter 43 angeordnet, der mit zwei Schleifkontakten 42a und 42b elektrisch verbunden ist. Die starr am Handrad 35 angeordnete Achse 12 des Handgriffs 36 weist je eine den Schleifkontakten 42a und 42b gegenüberliegende Schleifbahn 41a und 41b auf. Über elektrische Leitungen 40 sind diese mit je einer weiteren am Handrad 35 angeordneten Schleifbahn 38a und 38b verbunden. Letzteren ist gegenüberliegend je ein weiterer Schleifkontakt 39a und 39b zugeordnet. Beide sind fest im Gehäuserahmen 32 des Mikrotoms 1 angeordnet und elektrisch mit der Steuereinrichtung 22 verbunden. Durch Betätigung des Schalters 43 im Griffstück 36a wird in der Steuereinrichtung 22 ein entsprechendes elektrisches Signal ausgelöst.

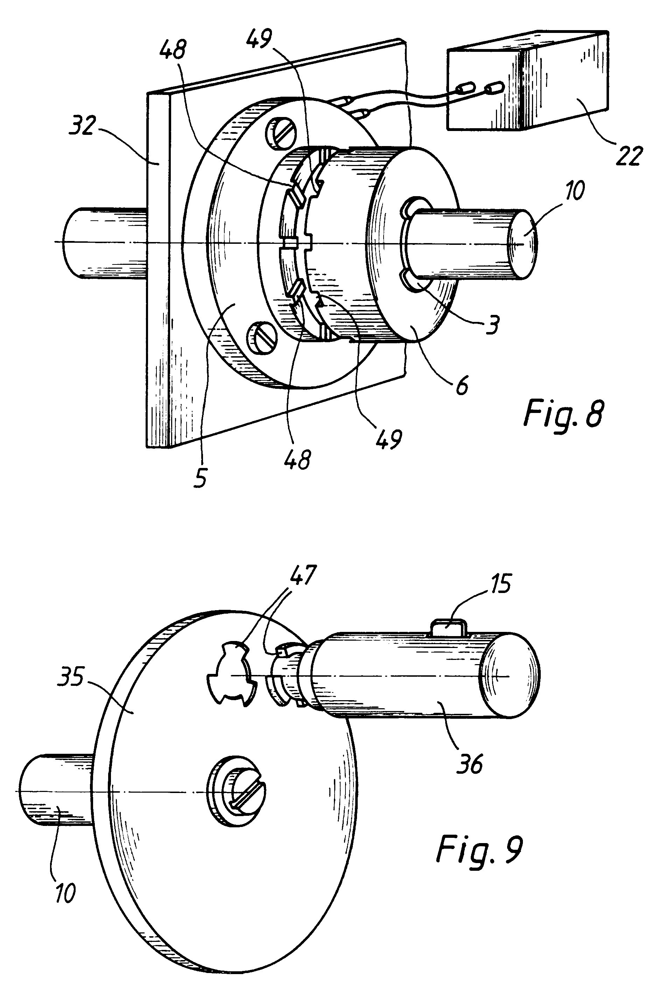

Die Fig. 8 zeigt einen Ausschnitt aus der Fig. 2 mit dem Elektro-Permanentmagneten 5, der mit dem Gehäuserahmen 32 fest verbunden und über elektrische Leitungen an die Steuereinrichtung 22 angeschlossen ist. Ihm gegenüberliegend ist die Kupplungsscheibe 6 auf der Welle 10 axial verschieblich angeordnet. Der Magnet 5 weist mehrere Rastnasen 48 auf, deren Gegenstücke als Rastnuten 49 an der Kupplungsscheibe 6 vorgesehen sind. Greifen die Rastnasen 48 in die Rastnuten 49 ein, so wird neben der kraftschlüssigen Verbindung durch die magnetischen Kräfte auch eine formschlüssige Verbindung der Kupplungsscheibe 6 mit dem Magneten 5 erreicht und somit eine noch wirksamere Arretierung der Welle 10.

In der Fig. 9 ist das Handrad 35 mit der daran angeordneten Welle 10 sowie dem Handgriff 36 dargestellt. Zur lösbaren Befestigung des Handgriffs 36 ist zwischen ihm und dem Handrad 35 eine hier als Bajonett ausgebildete Kupplung 47 vorgesehen. Diese Kupplung 47 ist insbesondere dann von besonderem Vorteil, wenn das Mikrotom eine weitere Handhabe 44′ zum manuellen Antrieb des Objektschlittens 2 aufweist. Dabei sind selbstverständlich, wie in der Fig. 2 mit der Welle 10′ bereits angedeutet, die notwendigen Übertragungselemente (7, 9; 7, 26, 29; 37; 38a - 40) beidseitig im bzw. am Mikrotom angeordnet, so daß auch hier die Sicherheitseinrichtung voll wirksam ist.

Die erfindungsgemäße Sicherheitseinrichtung, die anhand von Ausführungsbeispielen an einem Rotationsmikrotom beschrieben wurde, erhöht die Bediensicherheit eines derartigen Gerätes unter ergonomisch günstigerer Anordnung der Betätigungselemente. Da unmittelbar nach dem Loslassen des Handgriffs die Antriebseinrichtung arretiert wird, sind unkontrollierte Bewegungen des Objektschlittens bzw. des Messers und die damit verbundene Verletzungsgefahr ausgeschlossen.

Selbstverständlich kann die Sicherheitseinrichtung auch an einem Grundschlittenmikrotom vorgesehen sein. Auch ist es möglich, anstelle des beschriebenen Elektro-Permanentmagneten einen einfachen Elektromagneten zu verwenden. Dabei ist jedoch zu berücksichtigen, daß die Sicherheitseinrichtung nur mit angeschlossener Spannungsquelle wirksam ist.

### Bezugszeichenliste

- 1: Mikrotom
- 2: Objektschlitten
- 3: Sicherungsscheibe
- 4a, 4b, 4c, 4d: mechanische Koppelelemente
- 5: Elektr. Permanentmagnet-Kupplung
- 6: Kupplungsscheibe
- 7: Schaltring
- 8: Druckfeder
- 9: Sensor
- 10: Welle
- 10′: Welle
- 11: Druckstift
- 12: Achse
- 13: Gewindestift
- 14: Druckfeder
- 15: Hebel
- 16: Druckfeder
- 17: Stopfen
- 18: Stift
- 19: Nut
- 20: Rollenführung
- 21: Schaltringkante
- 22: Elektrische Steuereinrichtung
- 23: Aussparung
- 24: Paßfeder
- 25: Paßfeder
- 26: ringförmiger Steg
- 27: Scheibe
- 28: Lichtschranke
- 29: Elektromagnet
- 30: Hebel
- 31: Druckfeder
- 32: Gehäuserahmen
- 33: Messer
- 34: Objektaufnahme
- 35: Handrad
- 36: Handgriff
- 36a: Griffstück
- 37: Aussparungen
- 38a, 38b: Schleifbahnen
- 39a, 39b: Schleifkontakte
- 40: Verbindungsleitung
- 41a, 41b: Schleifbahnen
- 42a, 42b: Schleifkontakte
- 43: Taste
- 44: Handhabe
- 44′: Handhabe
- 45: Sperrscheibe
- 46: Zahnkranz
- 47: Bajonettkupplung
- 48: Rastnasen
- 49: Rastnuten

## Patentansprüche

1. Mikrotom mit einer Antriebseinrichtung zur Erzeugung einer Bewegung zwischen einem Messer und einer Objektaufnahme, mit einer Handhabe zur manuellen Betätigung der Antriebseinrichtung und mit einer Sperrvorrichtung zur Arretierung der Antriebseinrichtung, **dadurch gekennzeichnet**, daß die Handhabe (44, 44') einen Handgriff (36) mit einem um die Achse (12) des Handgriffs (36) drehbeweglichen Griffstück (36a) aufweist, wobei im Griffstück (36a) Schaltmittel (15; 43) zur Betätigung der Sperrvorrichtung (5, 6; 30, 45; 11, 37) vorgesehen sind, die Schaltmittel (15; 43) beim Umfassen des Griffstückes (36a) betätigt werden, der Sperrvorrichtung (5, 6; 30, 45; 11, 37) Mittel zur Aktivierung und Aufhebung der Arretierung der Antriebseinrichtung zugeordnet sind und die Arretierung der Antriebseinrichtung bei der Betätigung der Schaltmittel (15; 43) aufgehoben und beim Loslassen des Griffstückes (36a) die Arretierung aktiviert wird.

2. Mikrotom nach Anspruch 1, **dadurch gekennzeichnet**, daß die Sperrvorrichtung (5, 6; 30, 45) einen im Mikrotom (1) angeordneten Elektromagneten (5, 29) sowie eine auf einer Welle (10) der Antriebseinrichtung verdrehungsgesichert gelagerte Scheibe (6, 45) aufweist.

3. Mikrotom nach Anspruch 2, **dadurch gekennzeichnet**, daß die verdrehungsgesichert gelagerte Scheibe eine Sperrscheibe (45) ist, die fest mit der Welle (10) verbunden ist und einen Zahnkranz (46) aufweist, in den in Abhängigkeit vom Elektromagneten (29) ein schwenkbar am Gehäuserahmen (32) des Mikrotoms (1) angeordneter Sperrhebel (30) eingreift.

4. Mikrotom nach Anspruch 2, **dadurch gekennzeichnet**, daß die verdrehungsgesichert gelagerte Scheibe als eine auf der Welle (10) axial verschiebliche Kupplungsscheibe (6) ausgebildet ist, der Elektromagnet (5) am Gehäuserahmen (32) angeordnet und als ringförmiger Elektro-Permanentmagnet ausgebildet ist, und gegenüberliegend die auf der Welle (10) axial verschiebliche Kupplungsscheibe (6) angeordnet ist.

5. Mikrotom nach Anspruch 4, **dadurch gekennzeichnet**, daß der Magnet (5) sowie die Kupplungsscheibe (6) eine Verzahnung (48, 49) aufweisen.

6. Mikrotom nach Anspruch 2 - 5, **dadurch gekennzeichnet**, daß eine Steuereinrichtung (22) elektrisch mit dem Elektromagneten (5; 29) sowie einem Sensor (9; 28) verbunden ist.

7. Mikrotom nach Anspruch 6, **dadurch gekennzeichnet**, daß der Sensor (9) als Näherungssensor zur Erkennung der Stellung eines auf der Welle (10) verdrehungsgesichert gelagerten, axial verschieblichen Schaltringes (7) ausgebildet ist (Fig. 2).

8. Mikrotom nach Anspruch 6, **dadurch gekennzeichnet**, daß der Sensor als Lichtschranke (28) zur Erkennung der Stellung eines auf der Welle (10) verdrehungsgesichert gelagerten, axial verschieblichen Schaltringes ausgebildet ist, wobei der Schaltring (7) eine in die Lichtschranke (28) hineinragenden ringförmigen Steg (26) aufweist (Fig. 4).

9. Mikrotom nach mindestes einem der vorherigen Ansprüche, **dadurch gekennzeichnet**, daß als Schaltmittel im Griffstück (36a) ein Schalter (15) vorgesehen und im Innern des Handgriffs (36) ein unter Federkraft (16) stehender Druckstift (11) angeordnet ist, der in Abhängigkeit vom Schalter (15) axial bewegbar gegen den Schaltring (7) ausgebildet ist.

10. Mikrotom nach mindestes einem der vorherigen Ansprüche, **dadurch gekennzeichnet**, daß als Schaltmittel im Griffstück (36a) ein Schalter (43) vorgesehen und über elektrische Leitungen (40) und elektrische Schleifkontakte (38a, 38b; 39a, 39b; 41a, 41b; 42a, 42b) mit der Steuereinrichtung (22) verbunden ist.

11. Mikrotom nach mindestes einem der vorherigen Ansprüche, **dadurch gekennzeichnet**, daß als Schaltmittel im Griffstück (36a) ein Schalter (15) vorgesehen und im Innern des Handgriffs (36) ein unter Federkraft (16) stehender Druckstift (11) angeordnet ist, der in Abhängigkeit vom Schalter (15) axial bewegbar ausgebildet ist und am Gehäuserahmen (32) des Mikrotoms (1) Ausnehmungen (37) vorgesehen sind, in die das Ende des Druckstiftes (11) rastet.

12. Mikrotom nach mindestens einem der vorherigen Ansprüche, **dadurch gekennzeichnet**, daß an der Welle (10) eine weitere Handhabe (44') angeordnet ist und die Schaltmittel (15, 43) sowie die Sperrvorrichtung (5, 6; 30, 45; 11, 37) zum wechselseitigen manuellen Betrieb ausgebildet sind.

13. Mikrotom nach Anspruch 12, **dadurch gekennzeichnet**, daß die Handgriffe (36, 36') an den Handhaben (44, 44') lösbar befestigt sind.

## Claims

1. Microtome with a drive equipment for the production of a movement between a blade and an object receptacle, with a handhold for the manual actuation of the drive equipment and with a locking device for the arresting of the drive equipment, characterised thereby, that the handhold (44, 44') displays a handle (36) with a grip member (36a), which is rotationally movable about the axle (12) of the handle (36), wherein switching means (15; 43) for the actuation of the locking device (5, 6; 30, 45; 11, 37) are provided in the grip member (36a), the switching means (15; 43) are actuated on the gripping of the grip member (36a), the locking device (5, 6; 30, 45; 11, 37) is associated with means for the activation and cancellation of the arrest of the drive equipment and the arrest of the drive equipment is cancel led on the actuation of the switching means (15; 43) and the arrest is activated on the release of the grip member (36a).

2. Microtome according to claim 1, characterised thereby, that the locking device (5, 6; 30, 45) displays an electromagnet (5, 29) arranged in the microtome (1) as well as a disc (6, 45), which is borne secured against rotation on a shaft (10) of the drive equipment.

3. Microtome according to claim 2, characterised thereby, that the disc, which is borne secured against rotation, is a locking disc (45), which is firmly connected with the shaft (10) and displays a toothed rim (46), into which a locking lever (30), which is mounted to be pivotable at the housing frame (32) of the microtome (1), engages in dependence on the electromagnet (29).

4. Microtome according to claim 2, characterised thereby, that the disc, which is borne secured against rotation, is constructed as a clutch disc (6), which is axially displaceable on the shaft (10), the electromagnet is arranged at the housing frame (32) and constructed as annular permanent electromagnet and the clutch disc (6), which is axially displaceable on the shaft (10), is arranged lying oppositely.

5. Microtome according to claim 4, characterised thereby, that the magnet (5) as well as the clutch disc (6) display a toothing (48, 49).

6. Micrtone according to claim 2 to 5, characterised thereby, that a control equipment (22) is electrically connected with the electromagnet (5; 29) as well as a sensor (9; 28).

7. Microtome according to claim 6, characterised thereby, that the sensor (9) is constructed as proximity sensor for the recognition of the setting of an axially displaceable switching ring (7), which is borne secured against rotation on the shaft (10) (Figure 2).

8. Microtome according to claim 6, characterised thereby, that the sensor is constructed as light barrier (28) for the recognition of the setting of an axially displaceable switching ring which is borne secured against rotation on the shaft (10), wherein the switching ring (7) displays an annular web (26) projecting into the light barrier (28) (Figure 4).

9. Microtome according to at least one of the preceding claims, characterised thereby, that a switch (15) is provided as switching means in the grip member (36a) and a pressure pin (11), which stands under spring force (16) and is constructed to be axially movable towards the switching ring (7) in dependence on the switch (15), is arranged in the interior of the handle (36).

10. Microtome according to at least one of the preceding claims, characterised thereby, that a switch (43) is provided as switching means in the grip member (36a) and connected by way of electrical lines (40) and electrical wiper contacts (38a, 38b; 39a, 39b; 41a, 41b; 42a, 42b) with the control equipment (22).

11. Microtome according to at least one of the preceding claims, characterised thereby, that a switch (15) is provided as switching means in the grip member (36a) and a pressure pin (11), which stands under spring force (16) and is constructed to be axially movable towards the switching ring (7) in dependence on the switch (15), is arranged in the interior of the handle (36) and recesses (37), into which the end of the pressure pin (11) detents, are provided at the housing frame (32) of the microtome (1).

12. Microtome according to at least one of the preceding claims, characterised thereby, that a further handhold (44') is arranged at the shaft (10) and the switching means (15; 43) as well as the locking device (5, 6; 30, 45; 11, 37) are constructed for the alternate manual operation.

13. Microtome according to claim 12, characterised thereby, that the handles (36, 36') are detachably fastened at the handholds (44, 44').

## Revendications

1. Microtome comprenant un dispositif d'entraînement pour produire un déplacement entre un couteau et un logement d'objet, avec une manette pour l'actionnement manuel du dispositif d'entraînement et avec un dispositif de bloquage pour arrêter le dispositif d'entraînement, caractérisé en ce que la manette (44, 44') présente une poignée (36) avec une prise (36a) pouvant tourner autour de l'axe (12) de la poignée (36), dans la prise (36a) étant prévus des moyens de commutation (15; 43) pour l'actionnement du dispositif de bloquage (5, 6; 30, 45; 11, 37), que les moyens de commutation (15; 43) sont actionnés lorsqu'on saisit la prise (36a), que des moyens pour activer et supprimer le bloquage du dispositif d'entraînement sont associés au dispositif de bloquage (5, 6; 30, 45; 11, 37) et que le bloquage du dispositif d'entraînement est supprimé lors de l'actionnement des moyens de commutation (15; 43), et que le bloquage est activé lors du relâchement de la prise (36a).

2. Microtome selon la revendication 1, caractérisé en ce que le dispositif de bloquage (5, 6; 30, 45) présente un électro-aimant (5, 29) disposé dans le microtome (1) ainsi qu'un disque (6, 45) logé sur un arbre (10) du dispositif d'entraînement en étant assuré contre une rotation.

3. Microtome selon la revendication 2, caractérisé en ce que le disque logé de façon à être assuré contre une rotation est un disque de bloquage (45) qui est relié solidement à l'arbre (10) et présente une couronne dentée (46) avec laquelle vient en prise, en fonction de l'électro-aimant (29), un levier de bloquage (30) disposé de façon pivotante au châssis de boîtier (32) du microtome (1).

4. Microtome selon la revendication 2, caractérisé en ce que le disque logé de façon à être assuré contre une rotation est réalisé sous forme d'un disque d'accouplement (6) déplaçable axialement sur l'arbre (10), que l'électro-aimant (5) est disposé au châssis de boîtier (32) et est réalisé sous forme d'électro-aimant permanent annulaire, et qu'on a disposé en face le disque d'accouplement (6) déplaçable axialement sur l'arbre (10).

5. Microtome selon la revendication 4, caractérisé en ce que l'aimant (5) ainsi que le disque d'accouplement (6) présente une denture (48, 49).

6. Microtome selon la revendication 2 à 5; caractérisé en ce qu'un dispositif de commande (22) est relié électriquement à l'électro-aimant (5; 29) ainsi qu'à un capteur (9; 28).

7. Microtome selon la revendication 6, caractérisé en ce que le capteur (9) est réalisé sous forme de capteur de proximité pour reconnaître la position d'un anneau de commutation (7) déplaçable axialement, monté sur l'arbre (10) en étant assuré contre une rotation (Figure 2).

8. Microtome selon la revendication 6, caractérisé en ce que le capteur est réalisé sous forme de barrage photoélectrique (28) pour reconnaître la position d'un anneau de commutation déplaçable axialement monté sur l'arbre (10) en étant assuré contre une rotation, l'anneau de commutation (7) présentant une barre (26) annulaire faisant saillie dans le barrage photoélectrique (28) (Figure 4).

9. Microtome selon au moins l'une des revendications précédentes, caractérisé en ce qu'il est prévu comme moyen de commutation dans la prise (36a) un commutateur (15), et qu'il est disposé à l'intérieur de la poignée (36) une goupille de poussée (11) soumise à la force de ressort (16) qui est réalisée de façon déplaçable axialement contre l'anneau de commutation (7) en fonction du commutateur (15).

10. Microtome selon au moins l'une des revendications précédentes, caractérisé en ce qu'il est prévu comme moyen de commutation dans la prise (36a) un commutateur (43) et qui est relié par des lignes électriques (40) et des contacts à frottement électriques (38a, 38b; 39a, 39b; 41a, 41b; 42a, 42b) au dispositif de commande (22).

11. Microtome selon au moins l'une des revendications précédentes, caractérisé en ce qu'il est prévu comme moyen de commutation dans la prise (36a) un commutateur (15) et qu'à l'intérieur de la poignée (36) est disposée une goupille de poussée (11) soumise à la force de ressort (16) qui, en fonction du commutateur (15), est réalisé de façon déplaçable axialement, et que des évidements (37) sont prévus au châssis de boîtier (32) du microtome (1) dans lesquels s'enclenche l'extrémité de la goupille de poussée (11).

12. Microtome selon au moins l'une des revendications précédentes, caractérisé en ce qu'une manette supplémentaire (44') est disposée à l'arbre (10), et que les moyens de commutation (15, 43) ainsi que le dispositif de bloquage (5, 6; 30, 45; 11, 37) sont réalisés pour un fonctionnement manuel réciproque.

13. Microtome selon la revendication 12, caractérisé en ce que les poignées (36, 36') sont fixées amoviblement aux manettes (44, 44').
